# EUROPEAN PATENT SPECIFICATION

(11) **EP 2 911 420 B1**
(45) Date of publication and mention of the grant of the patent: **06.11.2019**
(21) Application number: 13846472.2
(22) Date of filing: 26.06.2013
(51) Int. Cl.: H04W 92/18, H04W 76/14, H04W 84/12

(54) **CONTENT DELIVERY**
ÜBERTRAGUNG VON INHALTEN
DISTRIBUTION DE CONTENU

(30) Priority: 16.10.2012 JP 2012228770
(43) Date of publication of application: 26.08.2015
(73) Proprietor: NEC Corporation, Tokyo 108-8001 (JP)
(72) Inventor: FUJITA, Norihito, Tokyo 108-8001 (JP); YAMAGAKI, Norio, Tokyo 108-8001 (JP)
(74) Representative: Vossius & Partner Patentanwälte Rechtsanwälte mbB
(86) International application number: PCT/JP2013/067466
(87) International publication number: WO 2014/061314

(56) References cited:
- WO-A1-2009/069091
- WO-A1-2011/114584
- JP-A- 2007 082 071
- JP-A- 2008 035 374
- JP-A- 2009 171 409
- US-A1- 2008 225 331

## Description

### Technical Field

The present invention relates to a content delivery method and a communication terminal, which deliver a content.

### Background Art

A scheme which is delivering data and contents mutually among communication terminals (nodes) connected with each other through wireless links, and thereby causing the communication terminals to share the data and contents with each other, is generally utilized by employing various application software. As its typical example, Epidemic Routing disclosed in Non Patent Literature 1 is mentioned. Epidemic Routing is a scheme of causing communication terminals to dispersively share the same content with each other, in an unstable wireless network such as a DTN (Delay/Disruption Tolerant Network).

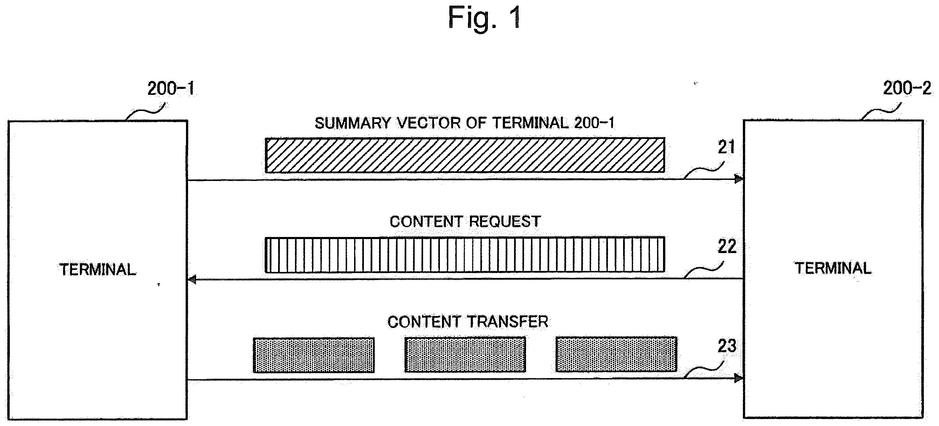

Fig. 1 is a diagram showing a process sequence in Epidemic Routing.

In Fig. 1, shown is an example of causing two communication terminals, corresponding to a terminal 200-1 and a terminal 200-2 in this case, to share a content with each other, by means of Epidemic Routing. Each of the terminals 200-1 and 200-2 periodically transmits a message referred to as a summary vector message, which includes information on the terminal (its node ID, IP (Internet Protocol) address or the like) and a list of contents held by the terminal. Further, by receiving a summary vector message transmitted from a terminal existing in its vicinity, each of the terminal 200-1 and 200-2 can become aware of information on a terminal neighboring itself and of a content not in its possession.

Here, considered here is a case where the terminal 200-2 receives a summary vector message transmitted by the terminal 200-1, as in the example shown in Fig. 1. Receiving a summary vector message transmitted from the terminal 200-1 in the process of a step 21, the terminal 200-2 becomes aware of the terminal 200-1 neighboring itself and refers to a list of contents held by the terminal 200-1, on the basis of the content of the received summary vector message.

Then, if detecting any content not in its possession (it does not hold), among the contents held by the terminal 200-1, the terminal 200-2 transmits to the terminal 200-1 a request message (content request) for acquiring the content, in the process of a step 22.

When receiving the content request transmitted from the terminal 200-2, the terminal 200-1 delivers the requested content to the terminal 200-2, in the process of a step 23.

As a result of the above-described way, where each of the terminals 200-1 and 200-2 periodically transmits a summary vector message and, if detecting any content not in its possession, requests and acquires the content, in Epidemic Routing, it becomes possible for the terminals to dispersively share the same content with each other.

Besides, a wireless LAN (Local Area Network) is widely used as a scheme of constructing a wireless network. IEEE802.11 is generally used as a wireless LAN standard. Also, widely used is the name Wi-Fi, which indicates that the interconnectivity between devices is certified in conformity to the IEEE802.11 standard.

In a wireless network of the case of using Epidemic Routing described above, assumed is an environment, such as that in a DTN, where disconnection of a link in the wireless network frequently occurs owing to the influence of terminal movement and of an obstacle.

In such an environment, it is desirable to use, as a setting of the wireless LAN, not an infrastructure mode but an ad hoc mode. The reasons to be mentioned are the following advantages of the ad hoc mode: (1) capability of constructing a peer to peer type link even with no access point existing, (2) no necessity of association establishment and rapid session establishment, and the like.

The advantageous functions (1) and (2) are desired for constructing a peer to peer type system, and for quickly exchanging control messages (a summary vector or a content request) even within a short link-up time, respectively.
Non Patent Literature 1: A. Vahdat and D. Becker, "Epidemic routing for partially-connected ad hoc networks", Duke Tech. Rep. CS-2000-06, July 2000.

WO 2009/069091 A1 relates to an apparatus being configured to receive a message indicating that an access point has pending data in an infrastructure network for the mobile station and is configured to receive at the mobile station the pending data from the access point.

US 2008/0225331 A1 relates to a wireless network printing system comprising a first wireless terminal which can selectively connect to an ad hoc network and an infrastructure network; a second wireless terminal which transmits data to the first wireless terminal via the ad hoc network and an image forming device which is included in the infrastructure device and prints the data relate via the first wireless terminal.

JP 2007-082071 A relates to a wireless communication apparatus comprising a means having an infrastructure mode for connecting with an access point and an ad hoc mode for communicating with other wireless communication apparatus and switching these two mode, and a control means for receiving a package transmitted from a connectionless wireless station which cannot be connected with a respective access point.

### Technical Problem

As has been described above, by using Epidemic Routing, it becomes possible to cause terminals to dispersively share the same content with each other even in an unstable wireless network such as a DTN. Further, when Epidemic Routing is performed using a wireless LAN, it is desirable to use an ad hoc mode for the setting of the wireless LAN.

However, while the use of an ad hoc mode of a wireless LAN has the advantages described above, it has problems described below.

A first problem is its vulnerability in security performance. In general, security setting applicable in an ad hoc mode is up to WEP, and it is impossible to use WPA (Wi-Fi Protected Access) or WPA2, which are considered to be comparatively robust and generally applicable in an infrastructure mode.

A second problem is its low communication speed. In general, an ad hoc mode can deal with a communication speed only up to 54 Mbps used in IEEE802.11a and IEEE802.11g. In an ad hoc mode, it is impossible to use a communication standard supporting a higher communication speed, such as IEEE802.11n, which is generally applicable in an infrastructure mode.

A third problem is its low utilization efficiency of wireless resources. In an ad hoc mode, since terminals transmit management frames to each other, such as beacon frames periodically transmitted, and accordingly, the management frames use a certain amount of wireless resources. Therefore, when the number of terminals is particularly large, an overhead of the management frames or the like becomes large. In contrast, in an infrastructure mode, transmission and reception of management frames are performed between an access point and a terminal, and accordingly, an overhead of them is relatively small.

Thus, while an ad hoc mode is a wireless LAN setting suitable for Epidemic Routing, it also has some problems.

The objective of the present invention is to provide a content delivery method and a communication terminal, both of which can solve the problems described above.

### Solution to Problem

The invention is defined in independent claims 1 and 5. Further features are defined in dependent claims. In the following, the parts of the description and drawings referring to embodiments which are not covered by the claims are not presented as embodiments of the invention but as background art or examples useful for understanding the invention.

### Advantageous Effects of Invention

As has been described above, according to the present invention, efficient content delivery can be realized.

### Brief Description of Drawings

Fig.1 is a diagram showing a process sequence in Epidemic Routing.
Fig.2 is a diagram showing an exemplary embodiment of a communication terminal of the present invention.
Fig.3 is a diagram showing an example of a configuration of a wireless network for when an ad hoc mode is set for a wireless LAN interface unit shown in Fig. 2.
Fig.4 is a diagram showing an example of a configuration of a wireless network when an infrastructure mode is set for the wireless LAN interface unit shown in Fig. 2.
Fig.5 is a flow chart for explaining an example of a process, among those comprised in a content delivery method relating to the embodiment shown in Fig. 2, when the communication terminal corresponds to the content reception side.
Fig.6 is a flow chart for explaining an example of a process, among those comprised in the content delivery method relating to the embodiment shown in Fig. 2, when the communication terminal corresponds to the content transmission side.

### Description of Embodiments

Hereinafter, an exemplary embodiment of the present invention will be described with reference to drawings.

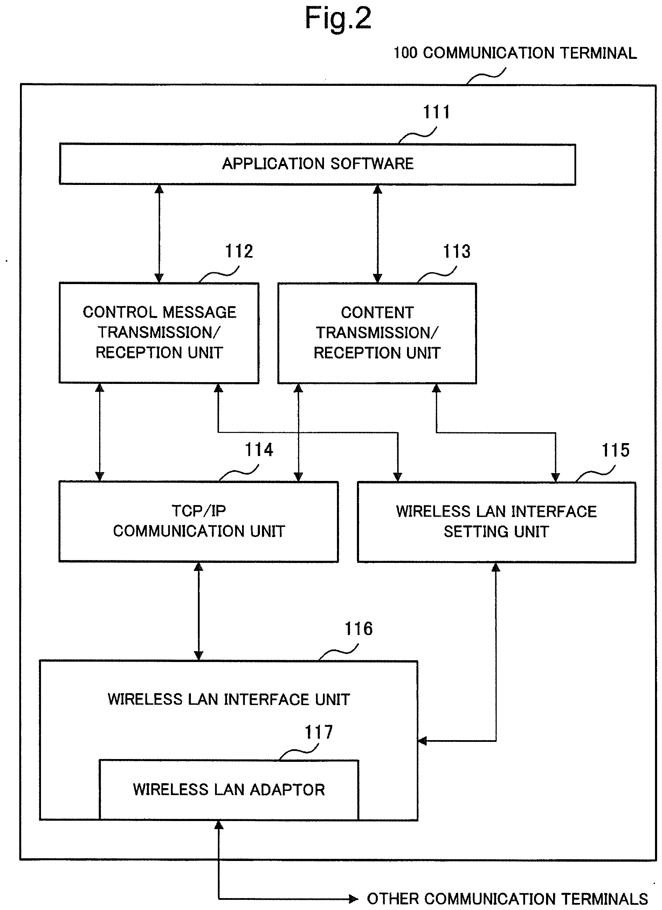

Fig. 2 is a diagram showing an exemplary embodiment of a communication terminal of the present invention.

As shown in Fig. 2, the communication terminal 100 in the present exemplary embodiment is provided with application software 111, a control message transmission/reception unit 112, a content transmission/reception unit 113, a TCP/IP communication unit 114, a wireless LAN interface setting unit 115, a wireless LAN interface unit 116 and a wireless LAN adapter 117. Here, the wireless LAN adapter 117 may be provided as a part of the wireless LAN interface unit 116, as shown in Fig. 2, or as a component separated from the wireless LAN interface unit 116. The communication terminal 100 shown in Fig. 2 is a communication device connected to a communication network via a wireless link, and it may be a communication terminal, such as a PC (Personal Computer) and a smart phone, which itself executes application software, or may be a communication device, such as a wireless LAN bridge, which relays communication performed by a communication terminal under its control, which executes application software. In the following descriptions, the case of the communication terminal 100 being a communication terminal such as a PC and a smart phone will be taken as an example.

The application software 111 is application software for performing content delivery. An application software which delivers a content, such as location information, sensor information or the like on the communication terminal 100, to be shared, to other communication terminals, by means of Epidemic Routing, can be exemplified as the application software 111. Further, before content delivery, the application software 111 performs a procedure of exchanging control messages with neighboring communication terminals via the control message transmission/reception unit 112, and after ending of the procedure, it actually performs content delivery to or from the neighboring communication terminals via the content transmission/reception unit 113. Here, when Epidemic Routing is used, the control messages include a summary vector message and a content request message before content delivery.

The control message transmission/reception unit 112 is provided with a function to transmit and receive control messages to and from neighboring communication terminals, in a procedure prior to delivery of a content on which the application software 111 performs a process for its transmission or reception. Besides, the control message transmission/reception unit 112 is also provided with a function to set, via the wireless LAN interface setting unit 115, the wireless LAN interface unit 116 such that an ad hoc mode is used in transmission and reception of the control messages.

The content transmission/reception unit 113 is provided with a function to transmit or receive a content, on which the application software 111 performs a process for its transmission or reception, to or from neighboring communication terminals. Also, the content transmission/reception unit 113 is provided with a function to set, via the wireless LAN interface setting unit 115, the wireless LAN interface unit 116 such that an infrastructure mode is used in transmission and reception of contents.

The TCP/IP communication unit 114 has a standard communication function installed in an OS (Operation System). In the present exemplary embodiment, the TCP/IP communication unit 114 provides transmission and reception services of messages and contents for the control message transmission/reception unit 112 and the content transmission/reception unit 113. The messages and contents are transmitted and received using a protocol of TCP (Transmission Control Protocol) or UDP (User Datagram Protocol).

The wireless LAN interface setting unit 115 is provided with a function to change (switch) the setting of the wireless LAN interface unit 116 in response to a request from the control message transmission/reception unit 112 or the content transmission/reception unit 113. Specifically, when having received a request from the control message transmission/reception unit 112, the wireless LAN interface setting unit 115 sets the wireless LAN interface unit 116 such that an ad hoc mode is used in transmission and reception of data (control messages). On the other hand, when having received a request from the content transmission/reception unit 113, the wireless LAN interface setting unit 115 sets the wireless LAN interface unit 116 such that an infrastructure mode is used in transmission and reception of data (contents).

The wireless LAN interface unit 116 is an interface with a wireless LAN, which is connected with the wireless LAN via the wireless LAN adapter 117. The wireless LAN interface unit 116 has two operation modes, which are an ad hoc mode and an infrastructure mode.

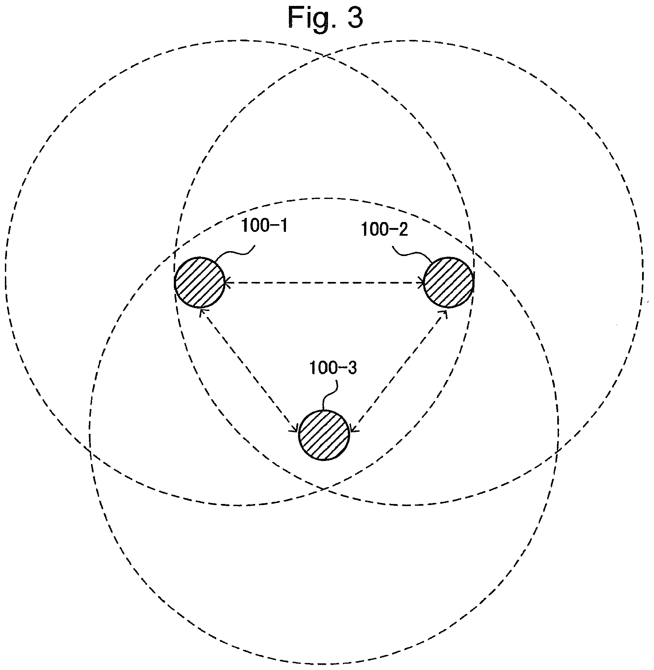

Fig. 3 is a diagram showing an example of a configuration of a wireless network when an ad hoc mode is set for the wireless LAN interface unit 116 shown in Fig. 2.

In Fig. 3, there exist communication terminals 100-1 to 100-3. There, dashed circles having respective ones of the communication terminals 100-1 to 100-3 located at their centers express areas in which the respective communication terminals 100-1 to 100-3 can be connected with the other communication terminals via wireless links, in the case an ad hoc mode is set for the wireless LAN interface unit 116 of each of the communication terminals 100-1 to 100-3. Here, it is considered that the areas do not actually become true circles, but for convenience of explanation, the areas are assumed to be circular in Fig. 3. As shown in Fig. 3, each of the communication terminals 100-1 to 100-3 is connected, via wireless links, with all communication terminals existing within the corresponding dashed circle, and the topology is thereby constructed.

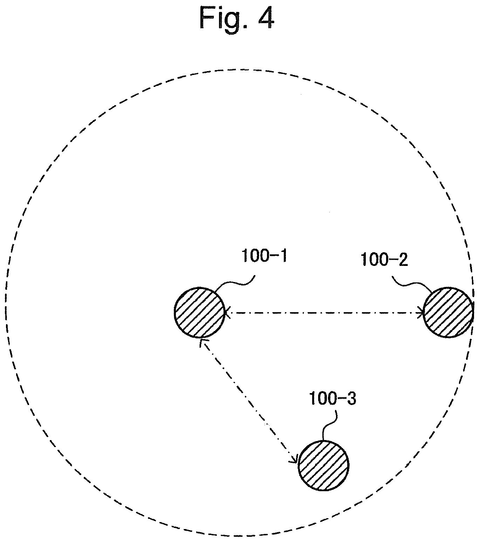

Fig. 4 is a diagram showing an example of a configuration of a wireless network when an infrastructure mode is set for the wireless LAN interface unit 116 shown in Fig. 2.

In the configuration shown in Fig. 4, there exist communication terminals 100-1 to 100-3. Then, in Fig. 4, shown is a configuration for a case where an infrastructure mode is set for the wireless LAN interface units 116 of each of the communication terminals 100-1 to 100-3, and the communication terminal 100-1 corresponds to the access point, and the communication terminals 100-2 and 100-3 to the clients. As shown in Fig. 4, all communication terminals existing within a dashed circle having the communication terminal 100-1 located at its center (in the case of Fig. 4, the communication terminals 100-2 and 100-3) are connected with the communication terminal 100-1 corresponding to the access point via wireless links, and the topology is thereby constructed.

As an example of a method of constructing a dynamic wireless network in such a manner of setting the communication terminal 100-1 to be the access point as that shown in Fig. 4, the Wi-Fi direct standard defined by the Wi-Fi alliance is known. In this manner, when a wireless network of an infrastructure mode is constituted by a plurality of communication terminals to participate in content delivery, by dynamically setting any one of the communication terminal to be the access point, as in the above-described way, it becomes possible to cut out the need of installing a dedicated access point device in advance.

Besides, in that case, it is further desirable to set a communication terminal which transmits (delivers) a content to be the access point and communication terminals which receive the content to be the clients. It is because a star-shaped wireless topology centered at the access point is thereby constructed, as shown in Fig. 4, and as a result, it becomes possible to increase the utilization efficiency of wireless resources during the content delivery.

The wireless LAN adapter 117 includes a physical device which provides the wireless LAN interface unit 116 and its function. Further, the wireless LAN adapter 117 is not limited to provide, in the wireless LAN interface unit 116, only one wireless LAN interface, but there may be also a case where it provides a virtual plurality of wireless LAN interfaces on a single physical wireless LAN adapter. As an example of a technology of providing such a virtual plurality of wireless LAN interfaces, the Virtual Wi-Fi is known. When the wireless LAN adapter 117 can provide a virtual plurality of wireless LAN interfaces, as in the Virtual Wi-Fi, the wireless LAN interface unit 116 has at least two wireless LAN interfaces, where an ad hoc mode is set for one of the wireless LAN interfaces (a first interface), and an infrastructure mode for the other one (a second interface). By thus setting the two wireless LAN interfaces, it also becomes possible to use them properly such that, with no need of dynamically switching between the wireless LAN operation modes, the wireless LAN interface set at the ad hoc mode is used for transmission and reception of control messages, and the wireless LAN interface set at the infrastructure mode for transmission and reception of contents.

Besides, in the above description of the configuration of the communication terminal 100, the four components, that is, the application software 111, the control message transmission/reception unit 112, the content transmission/reception unit 113 and the wireless LAN interface setting unit 115, have been described to be separate functions, but they may be actually installed together into a single application program.

Hereinafter, a content delivery method relating to the embodiment shown in Fig. 2 will be described. Here, a description will be given of operation of content delivery performed by the communication terminal 100 using Epidemic Routing. Firstly, a case where the communication terminal 100 receives a content is described.

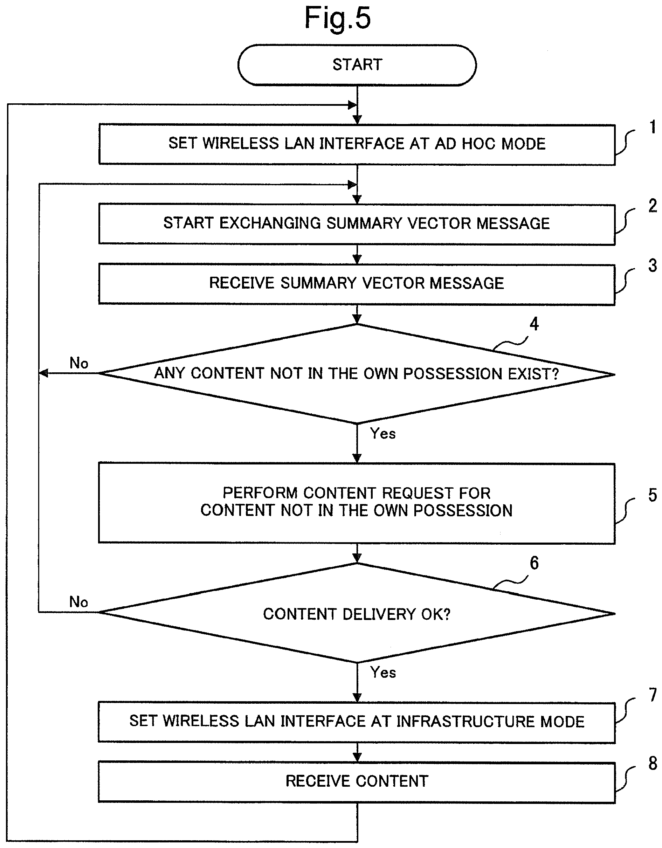

Fig. 5 is a flow chart for explaining an example of a process performed when the communication terminal 100 receives a content, among processes included in the content delivery method relating to the embodiment shown in Fig. 2 .

In the communication terminal 100, in order for the application software 111 to perform content sharing by means of Epidemic Routing, it is necessary first to exchange control messages. Accordingly, for the purpose of exchanging control messages, the control message transmission/reception unit 112 sets the operation mode of the wireless LAN interface unit 116 at an ad hoc mode, via the wireless LAN interface setting unit 115, in the process of a step 1.

Next, in the process of a step 2, the control message transmission/reception unit 112 starts exchanging summary vector messages with other communication terminals. The control message transmission/reception unit 112 periodically transmits a summary vector message. The summary vector message includes information on the own communication terminal 100 (its node ID, IP address or the like) and a list of contents in the possession of the communication terminal 100.

Receiving a summary vector message from any one of the other communication terminals in the process of a step 3, subsequently in the process of a step 4, the control message transmission/reception unit 112 checks the content list included in the received summary vector message, and determines whether or not any content not in the possession of (not held by) the own communication terminal 100 is included in the content list.

If no content not in the possession of the own communication terminal 100 is included in the content list, the process of the step 2 is performed again, and thereby, the control message transmission/reception unit 112 continues to exchange summary vector messages.

On the other hand, if any content not in the possession of the own communication terminal 100 is included in the content list, the control message transmission/reception unit 112 performs, in the process of a step 5, a content request for the content not in the possession. Specifically, the control message transmission/reception unit 112 transmits a content request for the content not in the possession to a communication terminal having transmitted the corresponding summary vector message, via the TCP/IP communication unit 114 and the wireless LAN interface unit 116.

Subsequently, in the process of a step 6, the control message transmission/reception unit 112 determines whether or not a response message expressing permission for delivery of the requested content has been sent back, in response to the content request message it transmitted. The determination may be performed in a manner to set a certain time period and then determine whether or not a response message has been sent back within the set time period since the transmission of the content request message.

If no response message has been sent back, the process of the step 2 is performed again, and thereby, the control message transmission/reception unit 112 continues to exchange summary vector messages.

On the other hand, if any response message has been sent back, the process is handed over from the control message transmission/reception unit 112 to the content transmission/reception unit 113 by the application software 111. Accordingly, in the process of a step 7, the content transmission/reception unit 113 sets the operation mode of the wireless LAN interface unit 116 at an infrastructure mode. In the process of a step 8, the content transmission/reception unit 113 actually performs content transfer and thereby receives the requested content.

When reception of the content has been completed in the process of the step 8, subsequently in the process of the step 1, the control message transmission/reception unit 112 sets the operation mode of the wireless LAN interface unit 116 at the ad hoc mode, and thereby continues to exchange summary vector messages.

Next, a case where the communication terminal 100 transmits a content will be described below.

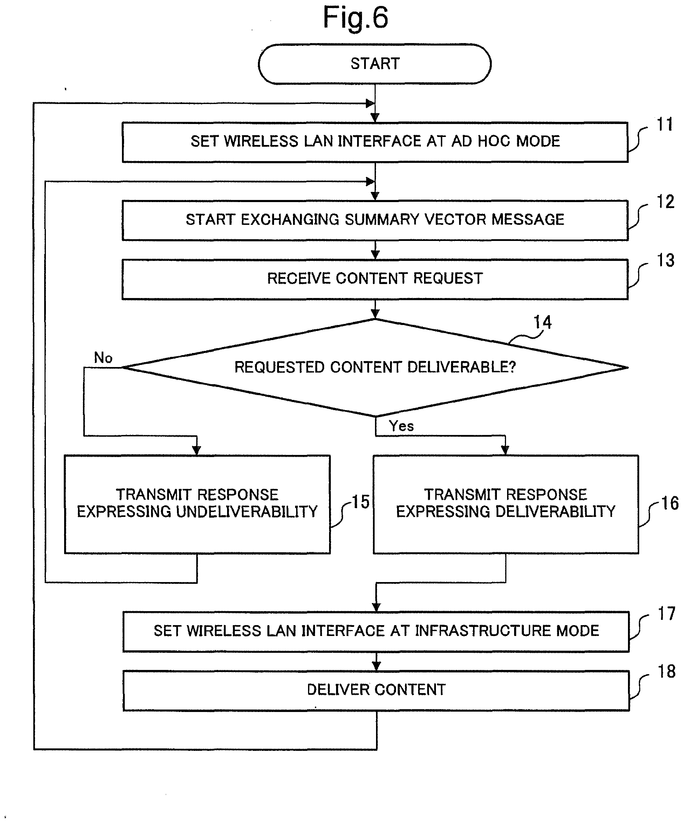

Fig. 6 is a flow chart for explaining an example of a process performed when the communication terminal 100 transmits a content, among processes included in the content delivery method relating to the embodiment shown in Fig. 2.

First, the same processes as those in the steps 1 and 2 are performed, respectively, in a step 11 and in a step 12.

During exchanging summary vector messages, if receiving a content request message transmitted from any one of the other communication terminals in the process of a step 13, then in the process of a step 14, the control message transmission/reception unit 112 inquires of the application software 111 about whether the content requested through the content request message is deliverable or not. While, all contents usually should be deliverable, the requested content becomes undeliverable in such cases, for example, where the communication terminal 100 cannot correctly hold the content, where the expiration date of the content's delivery (usage) has already passed, and where the content's delivery to the communication terminal having made the request is not permitted.

If the requested content is undeliverable, then in the process of a step 15, the control message transmission/reception unit 112 transmits a response message expressing the undeliverability to the communication terminal having made the request. Then, the process of the step 12 is performed again, and thereby, the control message transmission/reception unit 112 continues to exchange summary vector messages.

On the other hand, if the requested content is deliverable, then in the process of a step 16, the control message transmission/reception unit 112 transmits a response message expressing the deliverability to the communication terminal. Then, the process is handed over from the control message transmission/reception unit 112 to the content transmission/reception unit 113 by the application software 111. In the process of a step 17, the content transmission/reception unit 113 sets the operation mode of the wireless LAN interface unit 116 at the infrastructure mode.

After the setting of the operation mode of the wireless LAN interface unit 116 at the infrastructure mode, the content transmission/reception unit 113 performs actual content transfer in the process of a step 18, and thereby transmits (delivers) the requested content.

When delivery of the content has been completed in the process of the step 18, subsequently in the process of the step 11, the control message transmission/reception unit 112 sets the operation mode of the wireless LAN interface unit 116 at the ad hoc mode, and thereby continues to exchange summary vector messages.

In the above description given of operation of content delivery performed by the communication terminal 100 using Epidemic Routing in the present exemplary embodiment, the operation for two communication terminals is exemplified, the operation is similarly applicable to three or more terminals.

Hereinafter, the effect of the present exemplary embodiment will be described.

In the present exemplary embodiment, when content delivery is performed among communication terminals via a wireless LAN, each of the communication terminals performs the step of exchanging with the other communication terminals control messages until a request for content delivery is made, with setting its wireless LAN interface at an ad hoc mode, and subsequently performs the step of delivering a content to or from the other communication terminals, with setting its wireless LAN interface at an infrastructure mode.

As a result of that way of settings, during exchanging control messages, because of the characteristics of the ad hoc mode, the exchange can be performed in a peer to peer type manner and in a short link-up time, and it becomes easy to be aware of a neighboring communication terminal and of a content not in the own possession even in an unstable wireless network such as a DTN.

Further, during content delivery, because of the characteristics of the infrastructure mode, the delivery can be performed with higher security, higher communication speed and higher utilization efficiency of wireless resources than those in the ad hoc mode, and it accordingly becomes possible to efficiently deliver contents having a larger volume and higher confidentiality than control messages.

While the invention has been particularly shown and described with reference to exemplary embodiments thereof, the invention is not limited to these embodiments. It will be understood by those of ordinary skill in the art that various changes in form and details may be made therein without departing from the scope of the present invention as defined by the claims.

## Claims

1. A content delivery method for performing content delivery among a plurality of communication terminals (100) via a wireless LAN, and the method comprises:
a step wherein the plurality of communication terminals (100) exchange with each other control messages to be transmitted and received until a request for the content delivery is received and a response expressing deliverability of the requested content is transmitted, in an ad hoc mode; and
a step wherein a communication terminal (100) having received the request for the content delivery and having transmitted the response expressing the deliverability of the requested content, among the plurality of communication terminals (100), delivers the content to a communication terminal (100) having requested the content delivery, in an infrastructure mode.

2. The content delivery method according to claim 1, further comprising:
a step wherein each of the communication terminals (100) switches the operation mode of a wireless LAN adapter (117) provided in the communication terminal (100) from the ad hoc mode to the infrastructure mode.

3. The content delivery method according to claim 1, comprising:
a step wherein each of the communication terminals (100), by comprising a wireless LAN adapter (117) provided with a first virtual interface set at the ad hoc mode and a second virtual interface set at the infrastructure mode, uses the first virtual interface when transmitting or receiving data in the ad hoc mode; and
a step wherein each of the communication terminals (100) uses the second virtual interface when transmitting or receiving data in the infrastructure mode.

4. The content delivery method according to any one of claims 1 to 3, comprising:
a step wherein each of the communication terminals (100) operates as an access point when delivering the content in the infrastructure mode; and
a step wherein each of the communication terminals (100) operates as a client when receiving the content in the infrastructure mode.

5. A communication terminal (100) comprising:
a wireless LAN interface unit (116) for performing wireless LAN communication with other communication terminals (100);
a control message transmission/reception unit (112) for setting the wireless LAN interface unit (116) at an ad hoc mode and exchanging with the other communication terminals (100), via the wireless LAN interface unit (116), control messages to be transmitted and received until a request for content delivery is received and a response expressing deliverability of the requested content is transmitted; and
a content transmission/reception unit (113) for, when having received the request for the content delivery and having transmitted the response expressing the deliverability of the requested content, setting the wireless LAN interface unit (116) at an infrastructure mode and delivering the content to a communication terminal (100) having requested the content delivery via the wireless LAN interface unit (116).

6. The communication terminal (100) according to claim 5, wherein
the content transmission/reception unit (113) switches the operation mode of a wireless LAN adapter (117) provided in the wireless LAN interface unit (116) from the ad hoc mode to the infrastructure mode.

7. The communication terminal (100) according to claim 5, wherein
the wireless LAN interface unit (116) comprises a wireless LAN adapter (117) provided with a first virtual interface set at the ad hoc mode and a second virtual interface set at the infrastructure mode, and uses the first virtual interface when transmitting or receiving data in the ad hoc mode and uses the second virtual interface when transmitting or receiving data in the infrastructure mode.

8. The communication terminal (100) according to any one of claims 5 to 7, wherein
the communication terminal (100) operates as an access point when delivering the content in the infrastructure mode, and operates as a client when receiving the content in the infrastructure mode.

## Patentansprüche

1. Inhaltslieferverfahren zum Durchführen einer Inhaltslieferung unter mehreren Kommunikationsendgeräten (100) über ein drahtloses LAN, wobei das Verfahren aufweist:
einen Schritt, wobei die mehreren Kommunikationsendgeräte (100) in einem Ad-hoc-Modus miteinander Steuernachrichten austauschen, die gesendet und empfangen werden sollen, bis eine Anforderung der Inhaltslieferung empfangen wird und eine Antwort gesendet wird, die die Lieferbarkeit des angeforderten Inhalts ausdrückt; und
einen Schritt, wobei ein Kommunikationsendgerät (100) unter den mehreren Kommunikationsendgeräten (100), das die Anforderung der Inhaltslieferung empfangen hat und die Antwort gesendet hat, die die Lieferbarkeit des angeforderten Inhalts ausdrückt, in einem Infrastrukturmodus den Inhalt an ein Kommunikationsendgerät (100) liefert, das die Inhaltslieferung angefordert hat.

2. Inhaltslieferverfahren nach Anspruch 1, das ferner aufweist:
einen Schritt, wobei jedes der Kommunikationsendgeräte (100) den Betriebsmodus eines drahtlosen LAN-Adapters (117), der im Kommunikationsendgerät (100) vorgesehen ist, vom Ad-hoc-Modus in den Infrastrukturmodus umschaltet.

3. Inhaltslieferverfahren nach Anspruch 1, das aufweist:
einen Schritt, wobei jedes der Kommunikationsendgeräte (100), indem es einen drahtlosen LAN-Adapter (117) aufweist, der mit einer ersten virtuellen Schnittstelle, die in den Ad-hoc-Modus versetzt ist, und einer zweiten virtuellen Schnittstelle versehen ist, die in den Infrastrukturmodus versetzt ist, die erste virtuelle Schnittstelle verwendet, wenn es Daten im Ad-hoc-Modus sendet oder empfängt; und
einen Schritt, wobei jedes der Kommunikationsendgeräte (100) die zweite virtuelle Schnittstelle verwendet, wenn es Daten im Infrastrukturmodus sendet oder empfängt.

4. Inhaltslieferverfahren nach einem der Ansprüche 1 bis 3, das aufweist:
einen Schritt, wobei jedes der Kommunikationsendgeräte (100) als Zugangspunkt arbeitet, wenn es den Inhalt im Infrastrukturmodus liefert; und
einen Schritt, wobei jedes der Kommunikationsendgeräte (100) als Client arbeitet, wenn es den Inhalt im Infrastrukturmodus empfängt.

5. Kommunikationsendgerät (100) das aufweist:
eine drahtlose LAN-Schnittstelleneinheit (116) zum Durchführen einer drahtlosen LAN-Kommunikation mit anderen Kommunikationsendgeräten (100);
eine Steuernachrichten-Sende-/Empfangseinheit (112) zum Versetzen der drahtlosen LAN-Schnittstelleneinheit (116) in einen Ad-hoc-Modus und Austauschen mit anderen Kommunikationsendgeräten (100) über die drahtlose LAN-Schnittstelleneinheit (116) von Steuernachrichten, die gesendet und empfangen werden sollen, bis eine Anforderung einer Inhaltslieferung empfangen wird und eine Antwort gesendet wird, die die Lieferbarkeit des angeforderten Inhalts ausdrückt; und
eine Inhalts-Sende-/Empfangseinheit (113) zum Versetzen, wenn die Anforderung der Inhaltslieferung empfangen worden ist und die Antwort gesendet worden ist, die die Lieferbarkeit des angeforderten Inhalts ausdrückt, der drahtlosen LAN-Schnittstelleneinheit (116) in einen Infrastrukturmodus und Liefern des Inhalts an ein Kommunikationsendgerät (100), das die Inhaltslieferung über die drahtlose LAN-Schnittstelleneinheit (116) angefordert hat.

6. Kommunikationsendgerät (100) nach Anspruch 5, wobei
die Inhalts-Sende-/Empfangseinheit (113) den Betriebsmodus eines drahtlosen LAN-Adapters (117), der in der drahtlosen LAN-Schnittstelleneinheit (116) vorgesehen ist,
vom Ad-hoc-Modus in den Infrastrukturmodus umschaltet.

7. Kommunikationsendgerät (100) nach Anspruch 5, wobei
die drahtlose LAN-Schnittstelleneinheit (116) einen drahtlosen LAN-Adapter (117) aufweist, der mit einer ersten virtuellen Schnittstelle, die in den Ad-hoc-Modus versetzt ist, und einer zweiten virtuellen Schnittstelle versehen ist, die in den Infrastrukturmodus versetzt ist, und die erste virtuelle Schnittstelle verwendet, wenn es Daten im Ad-hoc-Modus sendet oder empfängt, und die zweite virtuelle Schnittstelle verwendet, wenn es Daten im Infrastrukturmodus sendet oder empfängt.

8. Kommunikationsendgerät (100) nach einem der Ansprüche 5 bis 7, wobei
das Kommunikationsendgerät (100) als Zugangspunkt arbeitet, wenn es den Inhalt im Infrastrukturmodus liefert, und als Client arbeitet, wenn es den Inhalt im Infrastrukturmodus empfängt.

## Revendications

1. Procédé de fourniture de contenu pour l'exécution d'une fourniture de contenu parmi une pluralité de terminaux de communication (100) via un réseau local sans fil, ledit procédé comprenant :
une étape où la pluralité de terminaux de communication (100) échangent entre eux des messages de commande à transmettre et recevoir jusqu'à ce qu'une demande de fourniture de contenu soit reçue et qu'une réponse exprimant la délivrabilité du contenu demandé soit transmise dans un mode ad hoc ; et
une étape où un terminal de communication (100) ayant reçu la demande de fourniture de contenu et ayant transmis la réponse exprimant la délivrabilité du contenu demandé parmi la pluralité de terminaux de communication (100), fournit le contenu à un terminal de communication (100) ayant demandé la fourniture de contenu dans un mode infrastructure.

2. Procédé de fourniture de contenu selon la revendication 1, comprenant en outre :
une étape où chacun des terminaux de communication (100) commute le mode de service d'un adaptateur de réseau local sans fil (117) prévu dans le terminal de communication (100) du mode ad hoc vers le mode infrastructure.

3. Procédé de fourniture de contenu selon la revendication 1, comprenant :
une étape où chacun des terminaux de communication (100), comprenant un adaptateur de réseau local sans fil (117) pourvu d'une première interface virtuelle définie en mode ad hoc et d'une deuxième interface virtuelle définie en mode infrastructure, recourt à la première interface virtuelle lors de la transmission ou de la réception de données en mode ad hoc ; et
une étape où chacun des terminaux de communication (100) recourt à la deuxième interface virtuelle lors de la transmission ou de la réception de données en mode infrastructure.

4. Procédé de fourniture de contenu selon l'une des revendications 1 à 3, comprenant :
une étape où chacun des terminaux de communication (100) fonctionne comme point d'accès lors de la fourniture du contenu en mode infrastructure ; et
une étape où chacun des terminaux de communication (100) fonctionne comme client lors de la réception du contenu en mode infrastructure.

5. Terminal de communication (100), comprenant :
une unité d'interface de réseau local sans fil (116) pour l'exécution d'une communication de réseau local sans fil avec d'autres terminaux de communication (100) ;
une unité de transmission/réception de messages de commande (112) pour définir l'unité d'interface de réseau local sans fil (116) en mode ad hoc et échanger avec les autres terminaux de communication (100), via l'unité d'interface de réseau local sans fil (116), des messages de commande à transmettre et recevoir jusqu'à ce qu'une demande de fourniture de contenu soit reçue et qu'une réponse exprimant la délivrabilité du contenu demandé soit transmise ; et
une unité de transmission/réception de contenus (113) pour, après réception de la demande de fourniture de contenu et transmission de la réponse exprimant la délivrabilité du contenu demandé, définir l'unité d'interface de réseau local sans fil (116) en mode infrastructure et fournir le contenu à un terminal de communication (100) ayant demandé la fourniture de contenu via l'unité d'interface de réseau local sans fil (116).

6. Terminal de communication (100) selon la revendication 5, où
l'unité de transmission/réception de contenus (113) commute le mode de service d'un adaptateur de réseau local sans fil (117) prévu dans l'unité d'interface de réseau local sans fil (116) du mode ad hoc vers le mode infrastructure.

7. Terminal de communication (100) selon la revendication 5, où
l'unité d'interface de réseau local sans fil (116) comprend un adaptateur de réseau local sans fil (117) pourvu d'une première interface virtuelle définie en mode ad hoc et d'une deuxième interface virtuelle définie en mode infrastructure, et recourt à la première interface virtuelle lors de la transmission ou de la réception de données en mode ad hoc, et recourt à la deuxième interface virtuelle lors de la transmission ou de la réception de données en mode infrastructure.

8. Terminal de communication (100) selon l'une des revendications 5 à 7, où
ledit terminal de communication (100) fonctionne comme point d'accès lors de la fourniture du contenu en mode infrastructure, et fonctionne comme client lors de la réception du contenu en mode infrastructure.
